# FASCICULE DE BREVET EUROPEEN

(11) **EP 0 355 782 B1**
(45) Date de publication et mention de la délivrance du brevet: **26.01.1994**
(21) Numéro de dépôt: 89115437.9
(22) Date de dépôt: 22.08.1989
(51) Int. Cl.: G02B 6/22

(54) **Fibre optique monomode protégée contre le détournement d'informations transmises et procédé de transmission utilisant cette fibre**
Nichtanzapfbare optische Monomodefaser und diese Faser verwendendes Übertragungsverfahren
Tap-resistant optical monomode fiber and transmission method using this fiber

(30) Priorité: 26.08.1988 FR 8811286
(43) Date de publication de la demande: 28.02.1990
(73) Titulaire: ALCATEL ALSTHOM COMPAGNIE GENERALE D'ELECTRICITE, 75382 Paris Cédex 08 (FR)
(72) Inventeur: Auge, Jacques, F-91530 Saint Cheron (FR); Beaufume, Pascale, F-91400 Orsay (FR)
(74) Mandataire: Weinmiller, Jürgen

(56) Documents cités:
- EP-A- 0 083 843
- US-A- 4 000 416
- US-A- 4 134 642
- IBM TECHNICAL DISCLOSURE BULLETIN, vol. 30, no. 12, mai 1988, pages 34-37, New York, US; "Tap-resistant optical fiber"

## Description

La présente invention concerne une fibre optique selon le préambule de la revendication 1 pour la transmission d'information et plus particulièrement la protection d'une telle transmission vis-à-vis des tentatives de détournements.

Il n'est malheureusement pas possible d'empêcher absolument un détournement. C'est pourquoi la présente invention vise seulement à rendre ce détournement plus difficile et/ou, si il est réalisé, à en avertir l'émetteur et/ou le destinataire de l'information.

Pour sa transmission un signal porteur d'information est le plus souvent mis sous forme électrique, sous forme d'onde électromagnétique rayonnée, ou sous forme d'une onde optique guidée, le plus souvent dans une fibre optique monomode. Une telle fibre comporte classiquement un coeur transportant le signal et une gaine optique monolithique avec le coeur, entourant celui-ci, présentant un indice de réfraction plus faible, et constituant en conséquence le siège d'une onde dite évanescente qui porte elle aussi le signal mais n'est décelable normalement qu'à très courte distance du coeur.

Cette gaine optique est elle même entourée d'une gaine extérieure de nature différente réalisant une protection mécanique et chimique.

Compte tenu de ses nombreux avantages (faibles pertes, très haut débit, immunité aux parasites électromagnétiques,...), la fibre monomode prend de plus en plus un rôle de premier plan, y compris dans les réseaux locaux. De plus, d'un point de vue de protection de l'information, la nature optique guidée du signal rend une intrusion plus difficile que sur des fils électriques classiques ou sur une liaison électromagnétique rayonnée. C'est pourquoi la présente invention s'applique à cette nature optique guidée et plus précisément au guidage par fibre monomode.

Pourtant, lors du traitement local du raccordement par fusion entre deux fibres, on a récemment découvert la possibilité de détourner une information grâce à des courbures ou microcourbures qui font qu'une vitesse de phase d'un mode guidé dans le coeur devient supérieure à celle des ondes planes susceptibles de se propager dans la gaine extérieure. Si on courbe la fibre, la vitesse de phase augmente proportionnellement à la distance au centre de courbure et, à partir d'une courbure critique, dépasse celle des ondes planes. L'onde évanescente est alors facile à capter.

Des procédés d'abrasion permettent de se rapprocher encore davantage du coeur et sont eux aussi utilisables pour un détournement d'information puisque des coupleurs à fibre monomode se fondent sur ce principe.

Par le document US-A-4 134 642 on connaît déjà une fibre optique selon le préambule de la revendication 1, dans laquelle le guide auxiliaire de forme annulaire propage un signal de contrôle et sert à détecter toute tentative de détournement de signaux guidés par le guide central.

Une structure similaire est divulguée par le document EP-A-0 083 843, mais ici le guide auxiliaire de forme annulaire sert à minimiser la dispersion optique le long de la fibre et n'est pas prévu pour guider un signal optique de contrôle.

La présente invention a pour but d'obtenir une protection efficace de l'information transmise dans une fibre monomode.

Ce but est atteint par la libre telle que définie par la revendication 1. Le procédé pour mettre en oeuvre cette fibre est défini dans la revendication 6. En ce qui concerne des exemples préférés de réalisation, référence est faite aux revendications secondaires.

A l'aide des figures schématiques ci-jointes, on va décrire plus particulièrement ci-après, à titre d'exemple non limitatif, comment la présente invention peut être mise en oeuvre.

La figure 1 représente une vue en perspective d'une fibre selon l'invention.

La figure 2 représente un diagramme de la variation de l'indice de réfraction en un point d'une section de cette fibre en fonction de la distance de ce point à l'axe de cette fibre.

Sur ces figures un coeur central de la fibre est représenté en 2, une gaine de confinement d'information en 4, un coeur annulaire en 6 et une gaine de confinement auxiliaire en 8, le rayon de ce coeur central 2 étant a et les rayons intérieur et extérieur du coeur annulaire 6 étant b et c, respectivement (le coeur central 2 et la gaine de confinement 4 constituant ainsi un guide central; et le coeur annulaire 6 et les gaines de confinement 4 et 8 un guide annulaire, respectivement).

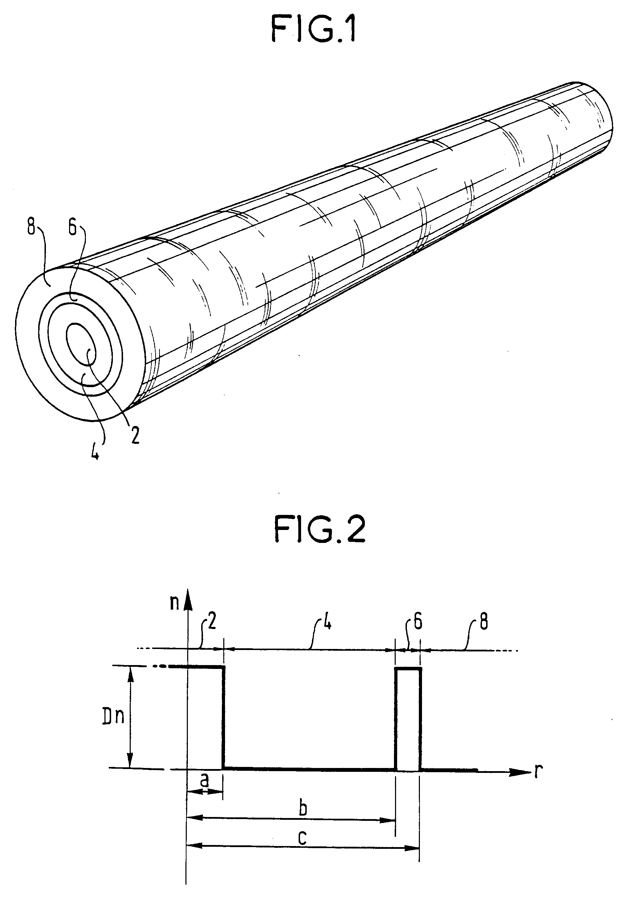

Sur la figure 2 la distance d'un point à l'axe de la fibre est représentée selon un axe r et l'indice de réfraction selon un axe n.

Le profil d'indice de réfraction est simplement celui dit à "saut d'indice", aussi bien pour le guide central que pour le guide annulaire. Une estimation théorique de l'interférence modale "crosstalk", entre le mode fondamental LP₀₁ du guide central et les modes du guide annulaire, a permis de définir les paramètres moyens de la structure pour garantir une bonne isolation (coefficient de diaphonie inférieur à -30 dB)

| | | |
|---|---|---|
| - coeur central | : a = 4,2 micromètres | Dn = 5.10⁻³ |
| - coeur annulaire | : c - b = 3 micromètres | Dn : 5.10⁻³ |
| - espacement coeur central - coeur annulaire | : b - a = 22 micromètres | |

Dans ces conditions, le guide annulaire est faiblement multimode.

La définition du guide central (coeur central 2 et gaine de confinement 4) est compatible avec les fibres monomodes conventionnelles optimisées pour une lumière dont la longueur d'onde est située dans la fenêtre spectrale centrée à 1,3 micromètre environ, et le guide annulaire peut propager quelques modes bien guidés n'ayant aucune interaction avec le mode de coeur central.

La protection de l'information contenue dans le guide central monomode d'une telle fibre est obtenue en faisant propager parallèlement au guide central un signal de brouillage guidé selon les modes du guide annulaire (constitué par le coeur annulaire 6 et les deux gaines de confinement 4 et 8). Toute intrusion passera nécessairement par ce guide annulaire ne contenant qu'un signal sans importance et, si toutefois le signal du coeur central était prélevé, il serait mélangé et brouillé par celui de ce guide annulaire.

Un système de réception de l'onde de brouillage est installé en bout de ligne. Tout prélèvement d'énergie peut donc être détecté comme une anomalie sur le niveau de puissance reçue. Ce système permet en plus d'agir sur la transmission de l'onde informative, ce qui élève encore le niveau de protection de cette ligne optique.

On peut noter que l'on a déjà proposé une fibre optique protégée contre le détournement d'information et qui comportait pour cela un coeur central entouré à distance par un coeur annulaire. Mais ces coeurs central et annulaire étaient fortement multimodes. Par rapport à cette fibre connue, une fibre selon l'invention a l'avantage de propager un seul mode dans le guide central (mode fondamental LP₀₁) et environ une dizaine de modes dans le guide annulaire dont seulement la première moitié est bien guidée (affaiblissement réduit sur grande longueur), du moins avec le jeu de paramètres de structure a, b, c, et Dn donné ci-dessus pour une application dans la fenêtre 1,3 micromètre. L'avantage de cette fibre réside dans le fait que, dans toute la gamme de valeurs de paramètres indiquées, seul le mode fondamental reste bien confiné dans le coeur, les modes d'ordre supérieur étant bien localisés dans le coeur annulaire. Il a été constaté qu'une modification des paramètres de structure à l'intérieur de cette gamme supprime (ou rajoute) un ou deux modes de propagation dans le guide annulaire. Dans les fibres monomodes classiques optimisées à 1,3 micromètre, il existe certaines contraintes sur les paramètres a et Dn pour garantir un fonctionnement monomode et éviter que le premier mode d'ordre supérieur LP₁₁ puisse se propager. Dans la fibre selon l'invention, ce problème est absent puisque ce mode comme tous les modes d'ordre supérieur est en quelque sorte "aspiré" par le guide annulaire.

On peut citer les cinq premiers modes d'ordre supérieur bien guidés dans le guide annulaire par ordre décroissant de leurs constantes de propagation : LP₀₂, LP₁₁, LP₂₁, LP₃₁ et LP₄₁.

Tout ceci est valable à 1,3 micromètre autour du profil d'indice nominal défini par les valeurs de paramètres de structures déjà indiquées. Si l'on s'écarte trop fortement de ce profil, les résultats précédents ne sont plus obtenus. A titre d'exemple on peut citer les cas extrêmes des trois fibres suivantes qui sont inadaptées à la mise en oeuvre de la présente invention :

| - Première fibre inadaptée : | |
|---|---|
| coeur central : | Coeur annulaire : |
| a = 5 micromètres | c-b = 5 micromètres |
| Dn = 5.10⁻³ | b-a = 5 micromètres |
| | Dn = 5.10⁻³ |

La trop forte proximité du coeur entraîne une configuration des modes où l'énergie se répartit dans le coeur et le guide annulaire même pour le mode fondamental LP₀₁.

| - Deuxième Fibre inadaptée : | |
|---|---|
| Coeur central : | Coeur annulaire : |
| a = 5 micromètres | c-b = 5 micromètres |
| Dn = 5.10⁻³ | b-a = 15 micromètres |
| | Dn = 10.10⁻³ |

Le renforcement de la valeur Dn du guide annulaire rend ce guide prépondérant puisque c'est lui qui transporte le mode fondamental. Le même phénomène se produit si l'on élargit le guide annulaire de quelques micromètres.

| - Troisième fibre inadaptée : | |
|---|---|
| Coeur central : | Coeur annulaire : |
| a = 4,2 micromètres | c-b = 1,5 micromètre |
| Dn = 5.10⁻³ | b-a = 24,3 micromètres |
| | Dn = 4,5.10⁻³ |

A l'inverse de la deuxième fibre précédente, une diminution de la largeur du guide annulaire et de son excès d'indice diminue très fortement les constantes de propagation des modes d'ordre supérieur et donc leur guidage est très fortement affecté.

## Revendications

1. Fibre optique protégée contre le détournement d'information comportant:
- un coeur central (2) pour permettre la propagation d'une onde lumineuse informative portant un signal informatif, l'indice de réfraction de ce coeur central étant un indice de coeur central,
- une gaine optique de confinement d'information (4) entourant ce coeur central de manière monolithique et présentant un indice de réfraction qui est un indice de gaine de confinement d'information et qui est inférieur audit indice de coeur central, de manière à confiner ladite onde informative dans ce coeur central en ne laissant pénétrer cette onde que de manière évanescente dans cette gaine, et à constituer ainsi un guide central,
- un coeur annulaire (6) entourant de manière monolithique ladite gaine de confinement d'information et présentant un indice de réfraction qui est un indice de coeur annulaire et qui est supérieur audit indice de gaine de confinement d'information, pour permettre à une onde lumineuse auxiliaire de se propager dans ce coeur annulaire,
- et une gaine optique de confinement auxiliaire (8) entourant de manière monolithique ledit coeur annulaire et présentant un indice de réfraction qui est un indice de gaine auxiliaire et qui est inférieur audit indice de coeur annulaire, pour confiner, en coopération avec ladite gaine de confinement d'information, ladite onde auxiliaire dans ce coeur annulaire et constituer ainsi un guide annulaire,
- cette fibre étant caractérisée par le fait que ledit guide central constitue un guide monomode pour la lumière destinée à s'y propager sous la forme d'onde lumineuse informative guidée, et ledit guide annulaire (6) constitue un guide faiblement multimode pour la lumière, de même longueur d'onde que celle de ladite onde informative, destinée à se propager dans ce guide annulaire sous la forme d'onde lumineuse auxiliaire guidée.

2. Fibre selon la revendication 1, caractérisée par le fait que le nombre de modes de propagation de ladite lumière auxiliaire dans ledit guide annulaire est compris entre 2 et 10.

3. Fibre selon la revendication 1, caractérisée par le fait que le rayon dudit coeur central (2) est compris entre 3,8 et 4,6 micromètres, l'épaisseur de ladite gaine de confinement d'information est comprise entre 20 et 24 micromètres, l'épaisseur dudit coeur annulaire (6) est comprise entre 2,7 et 3,3 micromètres et lesdits indices de coeur central et de coeur annulaire présentent, par rapport audit indice de gaine de confinement d'information, des excès d'indice (Dn) compris entre 45 et 55 millièmes.

4. Fibre selon la revendication 1, caractérisée par le fait que la longueur d'onde de ladite lumière est comprise entre 0,5 et 3 micromètres.

5. Fibre selon la revendication 4, caractérisée par le fait que la longueur d'onde de ladite lumière est d'environ 1,3 micromètres dans le cas d'une fibre à base de silice.

6. Procédé de transmission d'un signal lumineux informatif avec protection contre les détournements d'information, au moyen de la fibre optique selon la revendication 1, ce procédé étant caractérisé par le fait qu'il comporte, respectivement, l'injection d'un signal lumineux informatif dans le coeur central (2) de ladite fibre optique, ledit signal lumineux informatif s'y propageant alors sous la forme d'une onde lumineuse informative guidée, et l'injection, dans ledit coeur annulaire (6) de ladite fibre optique, d'une lumière auxiliaire de même longueur d'onde que celle de ladite lumière informative, ladite lumière auxiliaire se propageant alors dans ledit coeur annulaire sous la forme d'une onde lumineuse auxiliaire guidée pour y constituer une onde de brouillage et/ou une onde de détection d'intrusion.

7. Procédé selon la revendication 6, caractérisée par le fait que ladite onde auxiliaire porte un signal de brouillage.

## Claims

1. An optical fiber having protection against information tapping, the fiber comprising:
· a central core (2) for enabling an information light wave carrying an information signal to propagate, with the refractive index of the central core being referred to as the "central core index";
· information confinement optical cladding (4) surrounding the central core monolithically and having a refractive index which is referred to as the "information confinement cladding index" and which is less than said central core index, thereby confining said information wave in said central core by allowing said wave to penetrate only evanescently into said cladding, and thereby constituting a central waveguide;
· an annular core (6) surrounding said information confinement cladding monolithically and having a refractive index which is referred to as the "annular core index" and which is greater than said information confinement cladding index in order to enable an auxiliary lightwave to propagate in said annular core; and
· auxiliary confinement cladding (8) monolithically surrounding said annular core and having a refractive index referred to as the "auxiliary cladding index" which is less than said annular core index and serving to confine said auxiliary wave in said annular core, in cooperation with said information confinement cladding, and thereby constituting an annular waveguide;
said fiber being characterized by the fact that said central waveguide (6) constitutes a monomode waveguide for light, the light propagating in said central waveguide in the form of a guided information lightwave, and by the fact that said annular waveguide (6) constitutes a slightly multimode waveguide for light, having the same wavelength as said information wave, the light propagating in said annular waveguide in the form of a guided auxiliary lightwave.

2. A fiber according to claim 1, characterized by the fact that the number of propagation modes of said auxiliary light in said annular waveguide lies in the range 2 to 10.

3. A fiber according to claim 1, characterized by the fact that the radius of said central core (2) lies in the range 3.8 micrometers to 4.6 micrometers, the thickness of said information confinement cladding lies in the range 20 micrometers to 24 micrometers, the thickness of said annular core (6) lies in the range 2.7 micrometers to 3.3 micrometers, and said central core index and said annular core index are greater than said information confinement cladding index by an index increment (δn) lying in the range 0.0045 to 0.0055.

4. A fiber according to claim 1, characterized by the fact that the wavelength of said light lies in the range 0.5 micrometers to 3 micrometers.

5. A fiber according to claim 4, characterized by the fact that the wavelength of said light is about 1.3 micrometers for a silica-based fiber.

6. A method of transmitting an information light signal, with protection against information tapping, using an optical fiber according to claim 1, this method being characterized by the fact that it comprises the injection of an information light signal into the central core (2) of said optical fiber, said information light signal then propagating in said central core in the form of a guided information lightwave, followed by the injection of auxiliary light having the same wavelength as the information light, into said annular core (6) of said optical fiber, the said auxiliary light then propagating in said annular core in the form of a guided auxiliary lightwave, thereby constituting a masking wave and/or a wave for detecting intrusion.

7. A method according to claim 6, characterized by the fact that said auxiliary wave conveys a masking signal.

## Patentansprüche

1. Gegen Anzapfen von Informationen geschützte Lichtleitfaser, die aufweist:
- einen zentralen Kern (2), in dem sich eine informationstragende Lichtwelle, die ein Informationssignal tragt, fortpflanzt, wobei der Brechungsindex dieses zentralen Kerns ein Index des zentralen Kerns ist,
- eine optische Hülle (4) zum Einschließen einer Information, die diesen zentralen Kern monolithisch umgibt und einen Brechungsindex aufweist, der ein Index einer informationseinschließenden Hülle ist und der geringer als der Index des zentralen Kerns ist, um die informationstragende Welle in diesem zentralen Kern einzuschließen und diese Welle nur gedämpft in diese Hülle eindringen zu lassen, wodurch ein zentraler Lichtleiter gebildet wird,
- einen ringförmigen Kern (6), der die informationseinschließende Hülle monolithisch umgibt und einen Brechungsindex aufweist, der ein Index eines ringförmigen Kerns ist und größer ist als der Index der informationseinschließenden Hülle, um einer Hilfs-Lichtwelle zu erlauben, sich in diesem ringförmigen Kern auszubreiten,
- und eine optische Hilfs-Einschluß-Hülle (8), die den ringförmigen Kern monolithisch umgibt und einen Brechungsindex aufweist, der ein Index einer Hilfshülle ist und der niedriger ist als der Index des ringförmigen Kerns, um in Zusammenwirkung mit der informationseinschließenden Hülle die Hilfswelle in diesem ringförmigen Kern einzuschließen, wodurch ein ringförmiger Leiter gebildet wird,
dadurch gekennzeichnet, daß der zentrale Lichtleiter einen Monomodeleiter für das Licht darstellt, das sich darin in Form einer geführten informationstragenden Lichtwelle ausbreiten soll, während der ringförmige Lichtleiter (6) einen schwach mehrmodalen Wellenleiter für das Licht gleicher Wellenlänge wie die informationstragende Welle bildet, das sich in diesem ringförmigen Leiter in Form einer geführten Hilfs-Lichtwelle ausbreitet.

2. Faser nach Anspruch 1, dadurch gekennzeichnet, daß die Anzahl der Ausbreitungsmodi des Hilfslichts im ringförmigen Lichtleiter zwischen 2 und 10 liegt.

3. Faser nach Anspruch 1, dadurch gekennzeichnet, daß der Radius des zentralen Kerns (2) zwischen 3,8 und 4,6 Mikrometer liegt, während die Dicke der informationseinschließenden Hülle zwischen 20 und 24 Mikrometer, die Dicke des ringförmigen Kerns (6) zwischen 2,7 und 3,3 Mikrometer liegt und die Brechungsindices des zentralen Kerns und des ringförmigen Kerns im Vergleich zum Brechungsindex der informationseinschließenden Hülle Indexüberschüsse (Dn) zwischen 45 und 55 Tausendstel aufweisen.

4. Faser nach Anspruch 1, dadurch gekennzeichnet, daß die Wellenlänge des Lichts zwischen 0,5 und 3 Mikrometer liegt.

5. Faser nach Anspruch 4, dadurch gekennzeichnet, daß die Wellenlänge des Lichts etwa 1,3 Mikrometer im Fall einer Faser auf der Basis von Siliziumoxid beträgt.

6. Verfahren zur Übertragung eines informationstragenden Lichtsignals mit Schutz vor Informationsanzapfungen über die Lichtleitfaser gemäß Anspruch 1, dadurch gekennzeichnet, daß ein informationstragendes Lichtsignal in den zentralen Kern (2) der Lichtleitfaser eingespeist wird, das sich dort dann in Form einer geführten Lichtwelle ausbreitet, und daß in den ringförmigen Kern (6) der Lichtleitfaser ein Hilfslicht der gleichen Wellenlänge wie das informationstragende Licht eingespeist wird, das sich dann im ringförmigen Kern in Form einer geführten Hilfslichtwelle ausbreitet, um dort eine Störwelle und/oder eine Welle zur Erfassung eines Anzapfens zu bilden.

7. Verfahren nach Anspruch 6, dadurch gekennzeichnet, daß die Hilfswelle ein Störsignal trägt.
